**Europäisches Patentamt**

**European Patent Office**

**Office européen des brevets**

(11) Numéro de publication : **0 328 448 B1**

(12)

# FASCICULE DE BREVET EUROPEEN

(45) Date de publication du fascicule du brevet :
**31.03.93 Bulletin 93/13**

(51) Int. Cl.⁵ : **H04J 3/06, H04L 25/36**

(21) Numéro de dépôt : **89400341.7**

(22) Date de dépôt : **07.02.89**

(54) **Procédé et dispositif de synchronisation entre des terminaux communiquant par l'intermédiaire d'une chaîne n'assurant pas la transparence temporelle.**

(30) Priorité : **09.02.88 FR 8801508**

(43) Date de publication de la demande :
**16.08.89 Bulletin 89/33**

(45) Mention de la délivrance du brevet :
**31.03.93 Bulletin 93/13**

(84) Etats contractants désignés :
**DE GB IT**

(56) Documents cités :
**EP-A- 0 076 505
EP-A- 0 251 854
GB-A- 1 479 313
US-A- 4 056 851**

(73) Titulaire : **MATRA COMMUNICATION
50, rue du Président Sadate Creac'h Gwenn
F-29101 Quimper (FR)**

(72) Inventeur : **Dejean, Jacques Henri
Cabinet Ballot-Schmit 84 avenue Kléber
F-75116 Paris (FR)**
Inventeur : **Coudray, André Lucien
Cabinet Ballot-Schmit 84 avenue Kléber
F-75116 Paris (FR)**

(74) Mandataire : **Ballot, Paul Denis Jacques et al
Cabinet Ballot-Schmit, 7, rue le Sueur
F-75116 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 328 448 B1

## Description

L'invention concerne un procédé de synchronisation entre des terminaux qui communiquent par l'intermédiaire d'une chaîne, telle qu'un réseau commuté temporel asynchrone, n'assurant pas la transparence temporelle, ainsi que des dispositifs de mise en oeuvre d'un tel procédé.

La transmission d'informations entre les terminaux d'un réseau s'effectue de manière synchrone ou asynchrone, le choix entre ces deux modes dépendant de nombreux facteurs qui ne seront pas exposés ici. Il suffit simplement d'indiquer que le mode synchrone permet essentiellement de ne perdre aucune information grâce à l'affectation exclusive de ressources du réseau pendant toute la durée d'une connexion. Cependant, ce procédé est mal adapté aux flux de données à débit variable naturellement engendrés par les codeurs/compresseurs aujourd'hui disponibles. Mieux adapté à ces débits, le transfert en mode asynchrone d'un flux de données engendré par un service en temps réel, peut poser le problème de la restitution de la transparence temporelle sans perte d'information par saturation ou famine du récepteur.

Bien qu'il soit connu que certains signaux tels que la voix puissent supporter sans graves inconvénients une certaine perte d'information, il apparait nécessaire de résoudre ce problème dans le cas général.

On pourra se reporter à l'état de la technique constitué par la demande de brevet EP-A-0 076 505 (NIPPON ELECTRIC) qui décrit un système de transmission numérique entre un dispositif d'émission (codeur) 23 et un dispositif de réception (décodeur) 24 et dans lequel il est prévu de tenir compte de la différence entre la vitesse d'enregistrement dans une mémoire tampon qui correspond à celle de la communication à transmettre, et la vitesse de lecture de ladite mémoire qui correspond à la vitesse de transmission sur la ligne.

Cependant, il n'est ni décrit ni suggéré d'utiliser un signal d'horloge en provenance d'un réseau indépendant comme dans l'invention telle que revendiquée.

Un but de la présente invention est donc de mettre en oeuvre un procédé tel que décrit dans la revendication 1 qui permet de synchroniser des terminaux qui communiquent par l'intermédiaire d'une chaîne de transmission asynchrone, c'est à dire une chaîne qui ne comporte pas de référence temporelle dans le signal transmis ayant pour but de synchroniser lesdits terminaux.

Un autre but de la présente invention est de réaliser un ou plusieurs dispositifs tels que décrits dans la revendication 11 mettant en oeuvre le procédé selon l'invention.

L'invention se rapporte à un procédé de synchronisation entre au moins un terminal émission (A) et un terminal réception (B) qui ont accès à un réseau horloge pilote indépendant de fréquence Fo et entre lesquels sont transmis des messages d'information sans référence temporelle, lesdits messages d'informations étant transmis par le terminal émission (A) à un rythme défini par une fréquence Fe et étant enregistrés au terminal réception (B) dans une mémoire de synchronisation qui est lue à un rythme défini par une fréquence de réception Fr, caractérisé en ce qu'il comprend les étapes suivantes :

a) la génération dans chaque terminal émission A ou réception B d'un signal de synchronisation réseau à une fréquence Fpe (émission) ou Fpr (réception) à partir du signal du réseau horloge pilote à la fréquence Fo ;

b) la génération dans chaque terminal émission A ou réception B d'un signal à la fréquence d'émission Fe (terminal A) ou de réception Fr (terminal B) ;

c) la mesure, dans le terminal émission A, de la fréquence Fe pendant un intervalle de temps -a- qui est mesuré à l'aide d'un signal à la fréquence Fpe de manière à obtenir des codes P successifs P1, P2, ... qui sont représentatifs de la fréquence Fe ;

d) la mesure, dans le terminal émission A, de la fréquence Fpe pendant un intervalle de temps -a- qui est mesuré à l'aide d'un signal à la fréquence Fpe de manière à obtenir des codes N successifs N1, N2, ... qui sont représentatifs de la fréquence Fpe ;

e) la transmission des codes successifs N1, N2, ..., P1, P2, ..., au terminal réception B en même temps que les messages d'information, à un rythme défini par le signal à la fréquence Fe ;

f) la mesure, dans le terminal réception B, de la fréquence Fr pendant un intervalle de temps -b- qui est mesuré à l'aide d'un signal à la fréquence Fpr de manière à obtenir des codes X successifs X1, X2, ... qui sont représentatifs de la fréquence Fr ;

g) la modification de la fréquence Fr et donc des codes successifs X pour qu'il en résulte l'égalité des fréquences Fr et Fe.

Lorsque l'égalité des fréquences Fr et Fe est obtenue, la mémoire de synchronisation peut être lue à la fréquence Fr et cette lecture n'intervient qu'un certain intervalle de temps après l'émission des codes N et P. Cet intervalle de temps peut être fixé à priori comme étant le retard maximal T dû aux délais de transmission. Il peut aussi être déterminé par l'intervalle de temps qui est nécessaire à la mémoire de synchronisation pour atteindre un certain taux de remplissage, par exemple 0,5.

Dans une variante du procédé, il est prévu une opération complémentaire qui consiste à mesurer, dans le terminal réception B, la fréquence Fpr pendant un intervalle de temps -b- qui est mesuré à l'aide d'un signal à la fréquence Fpr de manière à obtenir des codes R successifs R1, R2, ... qui sont représentatifs de la fréquence Fpr, cette dernière étant égale à Fpe.

La fréquence Fr est modifiée pour que les codes X1, X2, ... soient modifiés et satisfassent une certaine relation avec les autres codes P, N et R qui sont utilisés selon la variante considérée.

La durée -b- peut être égale ou différente de la durée -a- et peut être égale à T. Par ailleurs la durée -a- peut être aussi choisie égale à T.

L'invention se rapporte également à un dispositif de mise en oeuvre dudit procédé de synchronisation, caractérisé en ce qu'il comprend :

- des premiers moyens, dans le terminal émission A, pour générer des signaux à la fréquence pilote Fpe et à la fréquence d'émission Fe ;
- des deuxièmes moyens, dans le terminal émission A, pour générer les codes successifs N et P ;
- des troisièmes moyens, dans le terminal émission A, pour transmettre au terminal réception B les codes N et P ;
- des quatrièmes moyens, dans le terminal réception B, pour générer des signaux à la fréquence pilote Fpr et à la fréquence Fr ;
- des cinquièmes moyens, dans le terminal réception B, pour générer les codes successifs X, et
- des sixièmes moyens, dans le terminal réception B, pour modifier la fréquence Fr et ainsi obtenir une modification des codes X pour qu'il en résulte l'égalité des fréquences Fr et Fe.

Ces différents moyens sont réalisés à l'aide de compteurs, registres, comparateurs, oscillateurs à fréquence variable, mémoires de file d'attente ... qui sont commandés par un microprocesseur connecté notamment aux registres pour en recueillir les contenus successifs.

D'autres caractéristiques et avantages de la présente invention apparaîtront à la lecture de la description suivante de plusieurs exemples particuliers de réalisation, ladite description étant faite en relation avec les dessins joints dans lesquels :

- la figure 1 est un schéma fonctionnel simplifié d'un dispositif de synchronisation selon l'invention entre un terminal émission A et un terminal réception B ;
- la figure 2 est un schéma fonctionnel d'un circuit d'élaboration dans chaque terminal d'un signal à la fréquence pilote Fo du réseau ;
- la figure 3 est un schéma fonctionnel d'un circuit d'élaboration des messages de synchronisation dans le terminal émission A ;
- la figure 4 est un schéma fonctionnel d'un circuit de synchronisation des signaux reçus dans chaque terminal réception B ;
- la figure 5 est un schéma fonctionnel d'une première variante d'un circuit de synchronisation des signaux reçus dans chaque terminal réception B ;
- les figures 6 et 9 montrent des diagrammes permettant de déterminer les conditions à réaliser pour obtenir l'égalité des fréquences Fr et Fe selon les procédés utilisés ;
- la figure 7 est un schéma fonctionnel d'une première variante de réalisation des cicuits d'élaboration du signal à la fréquence pilote et des messages de synchronisation lorsque le signal pilote est un signal de fréquence Fo ;
- la figure 8 est un schéma fonctionnel d'une deuxième variante de réalisation d'un circuit de synchronisation des signaux reçus dans chaque terminal lorsque le signal pilote est un signal de fréquence, et
- la figure 10 est un diagramme montrant le seuil de déclenchement de la lecture de la mémoire 6 en fonction de son taux de remplissage.

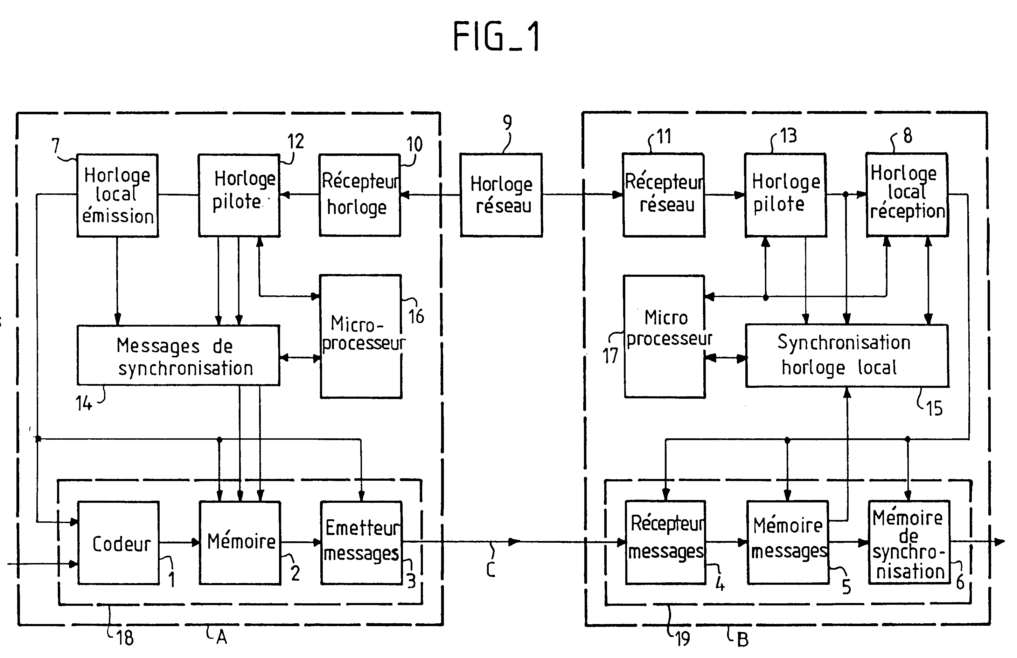

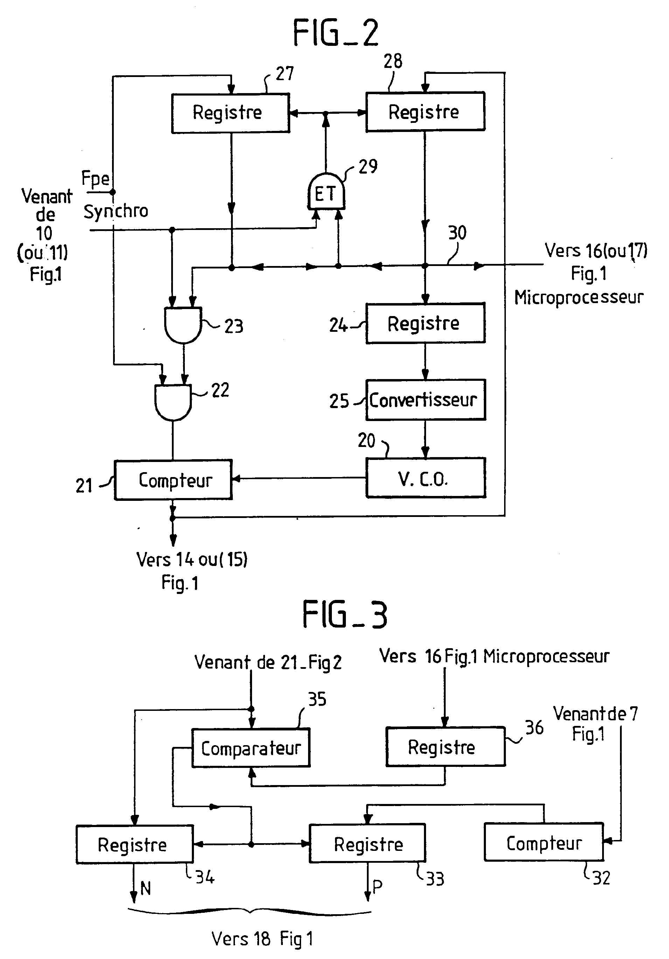

Deux terminaux A et B (figure 1) communiquent par l'intermédiaire d'une ligne de transmission C qui peut être une liaison par fils, fibre optique ou radio. Sur la figure 1 on n'a représenté dans le terminal A que la partie émission et dans le terminal B que la partie réception mais il est clair que le terminal A comprend aussi une partie réception et le terminal B une partie émission.

Dans le terminal A, la partie émission 18 comprend un circuit de codage 1 des signaux à émettres, une mémoire 2 des messages codés à émettre et un émetteur 3 des messages. Dans le terminal B, la partie réception 19 comprend un récepteur de messages 4, une mémoire de messages 5 des signaux reçus et une mémoire de synchronisation 6. A l'émission, les messages sont émis suivant une fréquence d'émission Fe (signal Fe) déterminée par un circuit horloge local 7 qui fournit différents signaux aux éléments 1, 2 et 3. A la réception dans le terminal B, les messages reçus sont traités et lus sur la base de signaux à une fréquence de réception Fr (signal Fr) fournis par un circuit horloge local 8. En l'absence d'une synchronisation entre le signal à la fréquence Fr et le signal à la fréquence Fe, la mémoire 6 peut être lue à une vitesse plus élevée qu'elle n'est enregistrée ou inversement et il en résultera une mauvaise lecture des messages reçus et donc une redondance d'informations ou bien une perte.

L'invention a pour but de remédier à ce problème en mettant en oeuvre un procédé qui permet de synchroniser le rythme de lecture de la mémoire 6 avec celui de l'émission 3. A cet effet, le procédé fait usage d'une horloge 9 qui est indépendante des terminaux et qui émet des signaux représentatifs d'une fréquence pilote Fo, ces signaux peuvent être des signaux horaires donnant l'heure mesurée à la fréquence Fo ou des signaux à la fréquence Fo. Ces signaux pilote sont reçus dans chaque terminal A (ou B) par un récepteur horloge 10 (ou 11) et sont utilisés pour élaborer dans le terminal A des signaux pilote à la fréquence Fpe dans un circuit 12 et dans le terminal B des signaux pilote à la fréquence Fpr dans un circuit 13. Dans le terminal A, les signaux pilote, qui seront appelés ci-après Fpe, servent dans un circuit 14 à créer en combinaison avec les signaux à la fréquence Fe (signaux Fe par la suite), des messages de synchronisation. Dans le terminal B, les signaux pilote, qui seront appelés ci-après Fpr, servent dans un circuit 15, à interpréter les messages de synchronisation reçus pour synchroniser la fréquence Fr sur la fréquence Fe. Dans le terminal émission A, les différents circuits 7, 12 et 14 sont commandés par un microprocesseur 16 tandis que dans le terminal réception B, les différents circuits 8, 13 et 15 sont commandés par un microprocesseur 17.

Dans son principe, le procédé consiste à mesurer dans le terminal A la fréquence Fe pendant des intervalles de temps déterminés par les signaux Fpe; dans le terminal B, on mesure également la fréquence Fr pendant des intervalles de temps déterminés par les signaux Fpr dont la fréquence est théoriquement égale à celle de Fpe, et à modifier la fréquence Fr pour que les mesures de Fr effectuées au terminal B soient égales à celles (Fe) au terminal A.

Pour réaliser cette comparaison, les mesures effectuées au terminal A sont transmises en même temps que les signaux de message au terminal B sous forme de messages ou codes de synchronisation. Ces messages indiquent, d'une part, une information représentative de la fréquence Fe et, d'autre part, une information représentative de l'intervalle de temps de mesure de la fréquence Fe, ledit intervalle étant mesuré par des signaux à la fréquence Fpe. Au terminal B, les mesures effectuées de la fréquence Fr pendant les mêmes intervalles de temps, - mesurées selon une base de temps à la fréquence Fpr = Fpe - sont comparées à celles reçues du terminal A et l'on modifie la fréquence Fr pour obtenir l'identité des mesures, ce qui conduit à obtenir Fr = Fe.

Lorsque l'identité est obtenue, les messages contenus dans la mémoire 6 sont lus selon un rythme qui est égal à celui de l'émission. Cependant, une telle égalité n'est pas suffisante pour obtenir une synchronisation car elle ne tient pas compte des retards subis par les messages. En effet, par suite de ces retards, notamment de transmission, il existe un temps de retard maximal T entre l'instant d'émission par l'émetteur 3 et l'instant d'enregistrement dans la mémoire 6. Cela conduit à effectuer les comparaisons mentionnées ci-dessus un certain temps au moins égal à T de manière à être certain que le terminal B a bien reçu et enregistré les messages. Pour qu'il en soit ainsi, plusieurs variantes du procédé et du circuit de synchronisation sont proposées.

Dans chaque terminal A (ou B), le circuit d'élaboration 12 (ou 13) d'un signal à la fréquence pilote Fpe (ou Fpr) du réseau comprend (Figure 2) un oscillateur à fréquence variable 20 dont la variation de fréquence est obtenue par l'application d'une tension variable fournie par un convertisseur numérique-analogique 25. Cet oscillateur est plus connu sous l'expression anglo-saxonne "Voltage Controlled Oscillator" ou V.C.O. La valeur numérique de cette tension est fournie par un registre 24 qui est chargé par un microprocesseur 16 (ou 17) en fonction, notamment, des contenus de deux registres 27 et 28. Un registre 27 est chargé avec un nombre A1 représentatif de l'heure du réseau (signal horaire), qui est fourni par le récepteur 10 (ou 11) selon le terminal considéré. Un registre 28 est chargé avec un nombre B2 représentatif de l'heure du réseau de l'oscillateur 20 par l'intermédiaire d'un compteur 21 qui reçoit les signaux à la fréquence Fpe (ou Fpr). Le compteur 21 est initialisé à la valeur A1 (heure du réseau) par l'intermédiaire d'un circuit ET 22, qui reçoit, d'une part, la valeur A1 et, d'autre part, un signal d'ouverture fourni par un circuit ET 23. Ce circuit ET 23 est ouvert lorsqu'il reçoit simultanément un signal du microprocesseur 16 (ou 17) et un signal de synchronisation du récepteur 10 (ou 11) indiquant la réception d'un signal horaire. Le chargement des registres 27 et 28 est commandé par le signal de sortie d'un circuit ET 29 qui reçoit le signal de synchronisation, et un signal fourni par le microprocesseur 16 (ou 17). Le microprocesseur 16 (ou 17) est connecté aux différents éléments 27, 28, 29, 23 et 24 par l'intermédiaire d'une liaison bidirectionnelle ou BUS 30.

Le fonctionnement du circuit de la figure 2 est le suivant. A la réception d'un signal horaire de synchronisation, les registres 27 et 28 sont chargés avec le nombre A1, par exemple 10h00, soit directement pour le registre 27, soit par le circuit ET 22 et le compteur 21 pour le registre 28 (phase d'initialisation). Par ailleurs, le microprocesseur 16 (ou 17) charge le registre 24 pour que la fréquence de l'oscillateur 20 soit très voisine de la fréquence pilote Fpe (ou Fpr). Comme les contenus des registres 27 et 28 sont identiques, le microprocesseur 16 (ou 17) ne modifie pas le contenu du registre 24. Après cette initialisation, le compteur 21 compte, à la manière d'une montre, les impulsions reçues de l'oscillateur 20 à partir de la valeur initialisée A1 et le contenu variable B1 de ce compteur est chargé dans le registre 28. A la réception du signal horaire suivant A2, par exemple 10h01, le registre 27 est chargé avec la valeur A2 de ce signal horaire qui est comparée avec le contenu B1 du registre 28 qui, si la fréquence Fpe (ou Fpr) de l'oscillateur 20 est identique à la fréquence Fo, est égal au contenu A2 du registre 27, c'est-à-dire 10h01. S'il n'y a pas d'identité, c'est-à-dire A2 différent de B1, la différence est une mesure de l'écart de fréquence entre Fo et Fpe (ou Fpr). Cet écart est interprété par le microprocesseur 16 (ou 17) pour modifier le contenu du registre 24 et par voie de conséquence, la fréquence de l'oscillateur 20 dans le sens de la réduction dudit écart. Le circuit de la figure 2 permet donc d'asservir la fréquence Fpe (ou Fpr) de l'oscillateur 20 sur la fréquence pilote Fo de l'horloge 9 du réseau.

Il est clair que le circuit d'élaboration d'un signal à la fréquence pilote Fpe (ou Fpr) qui vient d'être décrit peut être réalisé selon différentes variantes sans faire oeuvre d'invention et sans sortir du cadre de la présente invention, l'important étant d'obtenir dans chaque terminal un signal à la fréquence Fpe (ou Fpr) aussi voisine que possible de la fréquence pilote Fo du réseau.

Dans chaque terminal émission A, le circuit d'élaboration des messages de synchronisation comprend, conformément à la figure 3, un compteur 32 qui est connecté au circuit horloge 7 (figure 1), un premier registre 33 qui est chargé par le contenu du compteur 32 tandis qu'un deuxième registre 34 est chargé par le contenu du compteur 21 du circuit de la figure 2. Les transferts de ces deux registres 33 et 34 sont commandés par le signal de sortie d'un comparateur 35 qui est connecté, d'une part, au compteur 21 pour recevoir une partie du code contenu dans ledit compteur et, d'autre part, à un registre 36 qui est connecté au microprocesseur 16 de la figure 1 pour recevoir un code définissant une certaine durée -a-. Cette durée -a- définit l'intervalle de mesure pendant lequel on mesure, d'une part, la fréquence Fpe par l'intermédiaire du compteur 21 et du registre 34 (figure 2) et, d'autre part, la fréquence Fe par l'intermédiaire du compteur 32 et du registre 33 (Figure 3).

Le fonctionnement du circuit de la figure 3 est alors le suivant en supposant que l'intervalle de temps -a- est d'une seconde et que l'on compte à l'aide d'impulsions ayant une fréquence d'un mégahertz. Le microprocesseur 16 (figure 1) charge le registre 36 avec le nombre 1.000.000 qui est donc comparé, dans le comparateur 35, avec les chiffres du compteur 21 (figure 2) qui compte les microsecondes. Lorsque le compteur 21 a compté 1.000.000, le comparateur 35 délivre un signal d'égalité qui est appliqué aux registres 33 et 34 de manière à transférer leur contenu vers la mémoire de messages 2 (figure 1). Dès le transfert effectué, les compteurs 21 et 32 étant en fonctionnement permanent, continuent à charger les registres 33 et 34.

La suite des codes N : N1, N2, N3 ... contenus dans le registre 34 au moment des transferts successifs sont des nombres représentatifs de l'heure et de la fréquence Fpe tandis que la suite des codes P : P1, P2, P3 ... contenus dans le registre 33 sont des nombres représentatifs de la fréquence Fe. Ces codes N et P sont calculés pendant l'intervalle de temps -a- qui a été mesuré par des impulsions liées à la fréquence Fpe.

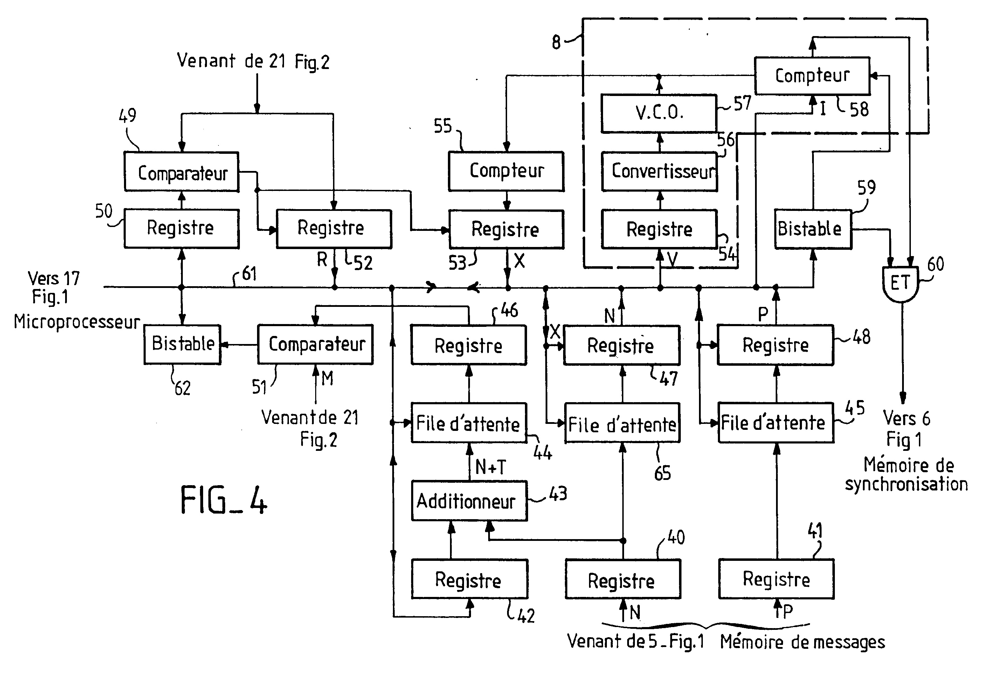

Ces codes N et P sont transmis sur la ligne de transmission C par l'intermédiaire de l'émetteur de messages 3 (figure 1) et sont donc reçus un certain temps après leur émission par le récepteur de messages 4 (figure 1) du terminal de réception B. Ils sont enregistrés dans la mémoire de messages 5 (figure 1) où ils sont lus pour être appliqués au circuit de synchronisation 15 qui sera maintenant décrit en relation avec la figure 4.

Au fur et à mesure de leur réception, les codes N et P sont enregistrés respectivement dans des registres 40 et 41 puis dans des mémoires 65 et 45 qui réalisent chacune une file d'attente. Une autre mémoire 44 est prévue pour réaliser une file d'attente pour les codes (N + T) résultant de l'addition, dans un circuit additionneur 43, de chaque code N transmis avec un code représentant la durée maximale T de la transmission ou une durée supérieure, cette durée étant fixée pour chaque terminal et fournie par le microprocesseur 17 (figure 1) qui est utilisé dans chaque terminal réception. Ces mémoires 65, 45 et 44 sont organisées de manière à lire d'abord les codes N, P et N + T qui sont les plus anciens et à les enregistrer respectivement dans des registres 47, 48 et 46. Ces codes N et P sont comparés respectivement à des codes équivalents R et X obtenus avec des signaux de fréquences Fpr et Fr et le but du circuit de synchronisation est, notamment, de modifier la fréquence Fr pour qu'elle devienne égale à Fe en fonction des différences constatées entre les codes N, P, R et X.

Les signaux à la fréquence Fr sont obtenus par un circuit analogue à celui qui est utilisé pour l'obtention des signaux Fpe et Fpr. Ce circuit comprend un oscillateur à fréquence variable 57 commandé par une tension fournie par un convertisseur numérique-analogique 56 qui reçoit un code V d'un registre 54 chargé par le microprocesseur 17 (figure 1).

Les signaux de l'oscillateur 57 sont appliqués à deux compteurs 55 et 58. Le contenu du compteur 55 est chargé dans un registre 53 et constitue le code X, mentionné ci-dessus, qui est représentatif de la fréquence Fr.

Le code contenu dans le compteur 58 est utilisé pour adresser la mémoire de synchronisation 6 (figure 1) par l'intermédiaire d'un circuit ET 60 dont l'ouverture est commandée par le signal d'état d'un circuit bistable 59. Le signal d'état de ce circuit bistable commande également le compteur 58 de la manière qui sera décrite ci-après. Le microprocesseur 17 (figure 1) commande l'état du circuit bistable 59 et initialise le compteur 58 à une valeur I.

Le code R, qui est représentatif de la fréquence Fpr, est obtenu à l'aide du compteur 21 (figure 2) dont la sortie est connectée au registre 52.

Le compteur 21 (figure 2) est connecté à deux comparateurs 49 et 51. Le comparateur 49 est analogue au comparateur 35 (figure 3) et reçoit, d'une part, d'un registre 50 un code correspondant à une durée -b- (par exemple une seconde mesurée en microsecondes) et, d'autre part, les chiffres significatifs du compteur 21 permettant de compter 1.000.000. La durée -b- est fixée par le microprocesseur 17 (figure 1) et n'est pas nécessairement égale à -a- mais en est voisine. La sortie du comparateur 49 est connectée aux registres 52 et 53 pour commander leur chargement, le microprocesseur 17 prenant connaissance ensuite de leur contenu.

Le comparateur 51 reçoit, d'une part, le contenu du compteur 21 (figure 2) c'est-à-dire le code R et, d'autre part, le code (N + T) fourni par le registre 46 de sortie de la mémoire 44. Le signal d'égalité qui est fourni par ce comparateur 51 commande l'état d'un circuit bistable 62 accessible au microprocesseur 17 (figure 1).

Le microprocesseur 17 (figure 1) est connecté aux différents éléments 42, 44, 45, 65, 46, 47, 48, 50, 52, 53, 54, 58, 59 et 62 du circuit de la figure 4 par une liaison bidirectionnelle ou BUS 61.

Le fonctionnement du circuit de synchronisation de la figure 4 est le suivant. Les messages ou codes de synchronisation N1, N2, N3 ..., qui donnent l'heure du terminal émission A mesurée à la fréquence pilote émission Fpe, et P1, P2, P3 ..., qui sont représentatifs de la fréquence émission Fe, sont à leur réception dans le terminal réception B aiguillés respectivement vers les registres 40 et 41 avant d'être enregistrés dans les mémoires de file d'attente 65 et 45. Par ailleurs, les codes N1, N2, N3 sont additionnés dans un circuit additionneur 43 à un code T représentant la durée maximale de transmission entre les terminaux A et B et tenant compte des temps de transmission des signaux horaires du réseau horloge pilote. Les codes résultant de cette addition sont enregistrés dans la mémoire de file d'attente 44. Ces mémoires de file d'attente 65, 45 et 44 sont gérés par le microprocesseur 17 par l'intermédiaire du BUS 61 de manière à exploiter immédiatement les suites de codes N1, N2, N3 ..., P1, P2, P3 ..., N1 + T, N2 + T, N3 + T ... en les transférant respectivement dans les registres 47, 48 et 46 pour être comparés aux contenus des registres 52 (codes R1, R2, R3 ...), 53 (codes X1, X2, X3 ...) et du compteur 21. Les deux premières comparaisons sont effectuées par le microprocesseur 17 tandis que la troisième est effectuée par le comparateur 51.

A chaque période de durée -b-, que l'on supposera égale à -a- dans un premier temps, les registres 52 et 53 sont chargés le premier avec les codes R1, R2, R3 ... qui sont représentatifs de l'heure du terminal réception B mesurée à la fréquence pilote réception Fpr et le deuxième avec les codes X1, X2, X3 ... qui sont représentatifs de la fréquence réception Fr. On comprend alors que la fréquence Fr sera égale à Fe si l'on fait en sorte que les codes R et X soient égaux respectivement aux codes N et P (cas b = a) en modifiant la fréquence de l'oscillateur 57 en fonction des écarts constatés.

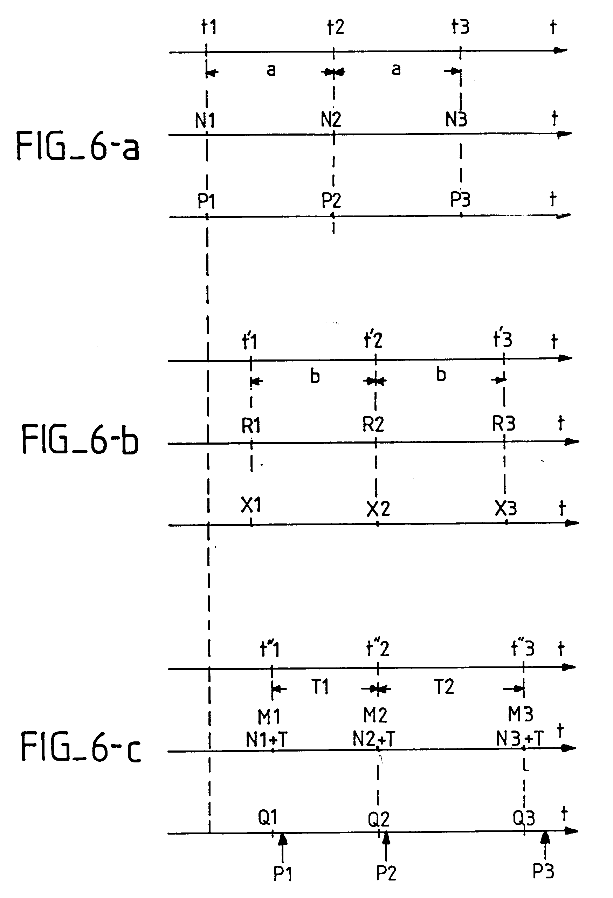

De manière plus précise, les diagrammes des figures 6a et 6b permettent de comprendre comment l'égalité des fréquences Fe et Fr est obtenue. Au terminal émission A (figure 6a), les couples de messages N1-P1, N2-P2, N3-P3, ... sont émis aux instants t1, t2, t3 ... séparés par des intervalles de temps égaux -a-. On peut écrire les égalité suivantes :

$$a = t2 - t1 = (N2 - N1)Tpe = t3 - t2 = (N3 - N2)Tpe$$
$$a = t2 - t1 = (P2 - P1)Te = t3 - t2 = (P3 - P2)Te$$

dans lesquelles $Tpe = {}^1/_{Fpe}$ et $Te = {}^1/_{Fe}$.

Il en résulte l'égalité des rapports suivants :

$$\frac{N2 - N1}{P2 - P1} = \frac{N3 - N2}{P3 - P2} = \frac{Te}{Tpe} = \frac{Fpe}{Fe} = \frac{Fo}{Fe} \quad (1)$$

Au terminal réception B (figure 6b), les couples de codes R1-X1, R2-X2, R3-X3 sont affichés dans les registres 52 et 53 aux instants t'1, t'2, t'3 ... séparés par des intervalles de temps égaux -b-. On peut également écrire les égalités suivantes :

$$b = t'2 - t'1 = (R2 - R1)Tpr = (t'3 - t'2) = (R3 - R2)Tpr$$
$$b = t'2 - t'1 = (X2 - X1)Tr = (t'3 - t'2) = (X3 - X2)Tr$$

dans lesquelles $Tpr = {}^1/_{Fpr}$ et $Tr = {}^1/_{Fr}$.

Il en résulte l'égalité des rapports suivants :

$$\frac{R2 - R1}{X2 - X1} = \frac{R3 - R2}{X3 - X2} = \frac{Tr}{Tpr} = \frac{Fpr}{Fr} = \frac{Fo}{Fr} \quad (2)$$

Le rapprochement de (1) et (2) conduit notamment à :

$$Fo = Fe \frac{N2 - N1}{P2 - P1} = Fr \frac{R2 - R1}{X2 - X1}$$

En conséquence, si l'on veut asservir la fréquence Fr à la fréquence Fe, le microprocesseur 17 doit réaliser la condition :

$$X2 - X1 = \frac{R2 - R1}{N2 - N1} \times (P2 - P1) \quad (3)$$

qui peut s'écrire sous la forme générale :

$$Xi + 1 - Xi = \frac{Ri + 1 - Ri}{Ni + 1 - Ni} \times (Pi + 1 - Pi)$$

Pour la réaliser, le microprocesseur modifie la fréquence Fr, c'est-à-dire X1, X2, X3 ... en agissant sur la tension de commande de l'oscillateur 57 par l'intermédiaire de codes V qu'il affiche dans le registre 54.

Lorsque cette condition (3) est réalisée, la mémoire 6 (figure 1) peut être lue et cette lecture sera effectuée au même rythme qu'à l'émission car Fr = Fe. Cependant, cette lecture ne peut commencer que si l'heure du terminal réception est égale à N+T, c'est-à-dire l'heure N à laquelle les messages ont été émis augmentée du retard maximal T escompté. En effet, une lecture qui serait effectuée avant l'heure N+T risquerait d'être entachée d'erreurs. C'est le rôle du comparateur 51 qui fournit un signal d'égalité lorsque l'heure pilote locale définie par les codes M deviennent égaux à N + T. Lorsque le microprocesseur détecte ce signal d'égalité sur le circuit bistable 62, il ouvre le circuit ET 60 par l'intermédiaire du circuit bistable 59 et initialise le compteur 58 pour lire les messages contenus dans la mémoire 6 à partir d'une adresse déterminée par cette valeur d'initialisation I.

Le procédé et le dispositif qui viennent d'être décrits en relation avec les figures 1, 2, 3, 4, 6a et 6b présentent de nombreux avantages dont les plus importants sont les suivants :

- ils peuvent être utilisés quels que soient la fréquence Fe, les temps de transmission dans le réseau et la nature de ce dernier ;
- les calculs sont effectués par un microprocesseur unique et il est facile de modifier son programme pour tenir compte des modifications concernant notamment le temps de retard T, les valeurs de a et b ;
- l'asservissement de la fréquence Fr sur Fe est rapide de sorte que, dès le début de la lecture de la mémoire 6, la fréquence Fr est asservie à Fe car le dispositif dispose d'un intervalle de temps T - t pour réaliser l'asservissement si t est la durée effective de transmission;
- la perte d'un ou plusieurs codes de synchronisation n'a aucune influence sur la fréquence Fr.

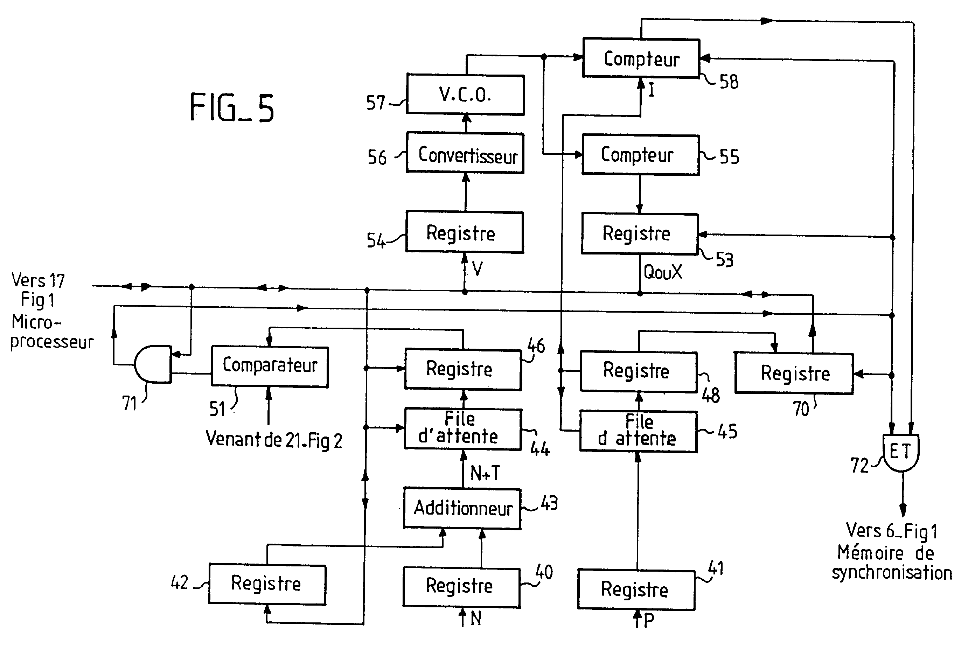

Le circuit de synchronisation de la figure 4 peut être simplifiée sans pour autant diminuer la qualité de traitement et on aboutit au circuit de la figure 5 dans lequel les éléments identiques à ceux de la figure 4 portent les mêmes références. La comparaison des schémas des figures 4 et 5 montre que, les éléments 47, 65, 49, 50 et 52 ont été supprimés mais que l'on a ajouté un registre 70 et des circuits ET 71 et 72. De ces simplifications, il résulte qu'il n'y a plus que deux files d'attente qui sont traitées : celle concernant les codes P1, P2, P3 ... et celle concernant les codes N1+T, N2+T, N3+T ... De plus, il n'y a plus d'échantillonnage du contenu des registres 52 et 53 à la période -b- pour obtenir les valeurs R1, R2, R3 ... et X1, X2, X3 ... mais un échantillonnage aux instants N1+T, N2+T, N3+T ... de codes P1, P2, P3 ... contenus dans le registre 70 et des codes Q1, Q2, Q3 ...(équivalents à X1, X2, X3 ...) contenus dans le registre 53 comme le montre le diagramme de la figure 6c qui est analogue au diagramme de la figure 6b.

Ce diagramme de la figure 6c montre que l'on peut écrire les égalités suivantes :
$$M1 = N1 + T, M2 = N2 + T, M3 = N3 + T, ...$$
qui déterminent les instants t''1, t''2, t''3 ... où le comparateur 51 fournit un signal d'égalité, instants qui sont séparés par des intervalles de temps T1, T2, ...

On a alors

$$T1 = (M2-M1)\ Tpr = (N2+T - N1-T)\ Tpr$$
$$= (N2-N1)\ Tpr$$

ainsi que

$$T2 = (M3-M2)\ Tpr = (N3+T - N2-T)\ Tpr$$
$$= (N3-N2)\ Tpr$$

Or Tpr = Tpe = Tp, ce qui entraîne T1 = T2 = a

Par ailleurs, l'intervalle -a- peut être exprimé par les égalités suivantes :
$$a = (Q2 - Q1)\ Tr = (Q3 - Q2)\ Tr$$
et
$$a = (P2 - P1)\ Te = (P3 - P2)\ Te \quad (4)$$

Ces dernières égalités (4) montre que si l'on fait en sorte que P2-P1 = Q2-Q1, ou de manière générale Pi+1-Pi = Qi+1-Qi = Xi+1-Xi, elles ne peuvent rester vraies que si Te = Tr. A cet effet, le microprocesseur 17 compare les valeurs successives de P1, P2, P3 ... à Q1, Q2, Q3 ... et modifie la fréquence de l'oscillateur 57 pour que Q2-Q1 = P2-P1, on a alors Te = Tr.

Avec ce procédé et ce dispositif simplifiés, l'asservissement de la fréquence réception Fr sur la fréquence émission Fe s'effectue pendant l'intervalle de temps T au lieu de l'intervalle T-t.

Le fonctionnement du circuit de synchronisation de la figure 5 est analogue à celui de la figure 4, avec cette différence que les registres 53 et 70 ne sont chargés que lorsque le comparateur fournit un signal d'égalité entre M et N+T, signal qui est appliqué auxdits registres par l'intermédiaire du circuit ET 71. Ce sont les codes Q1, Q2, Q3 ... et P1, P2 P3 ... contenus respectivement dans les registres 53 et 70 qui sont utilisés par le microprocesseur 17 pour modifier le contenu V du registre 54 et donc la fréquence de l'oscillateur 57, ce qui modifiera le contenu du registre 53 lors de l'échantillonnage suivant.

Par ce procédé simplifié, on a également simplifié le circuit de synchronisation, ce qui permet de réaliser une économie sur le coût de l'ensemble du système. Par ailleurs, la qualité de la synchronisation est pratiquement la même que celle obtenue avec le circuit de synchronisation de la figure 4 mais avec un temps d'asservissement plus grand.

Les procédés et dispositifs de synchronisation qui viennent d'être décrits en relation avec les figures 1 à 6 font usage d'une horloge pilote, indépendante du réseau de transmission, qui envoie des signaux horaires, ce qui permet un asservissement en fréquence et en phase.

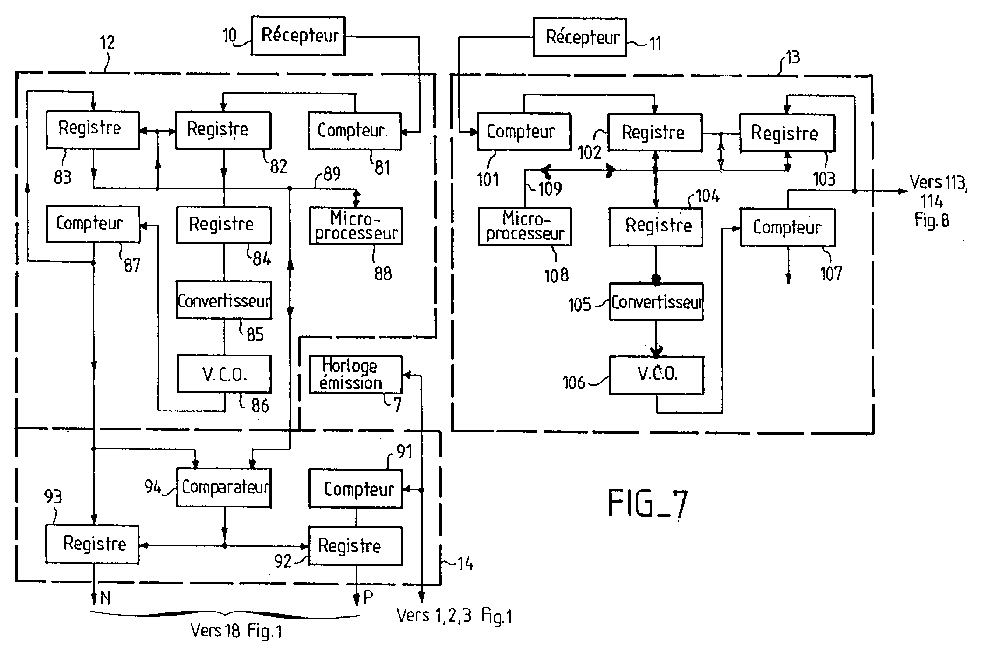

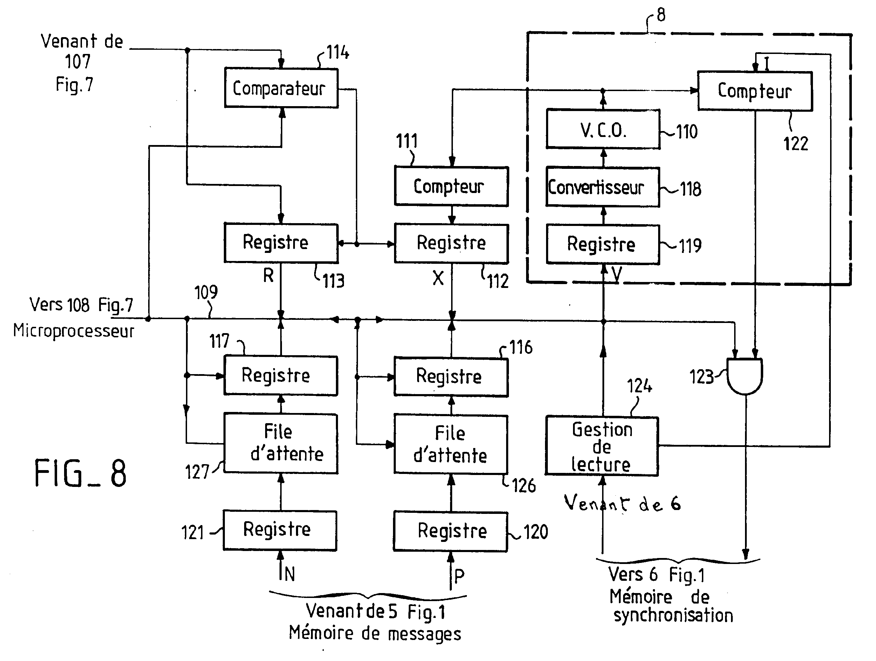

Dans le procédé et le dispositif de synchronisation qui seront maintenant décrits en relation avec les figures 7, 8, 9 et 10, l'horloge pilote du réseau ne distribue qu'un signal ayant une fréquence déterminée Fo de sorte que les terminaux ne seront asservis qu'en fréquence. Cependant dans son principe, tel qu'exposé en relation avec la description de la figure 1, le procédé reste le même. En effet, il consiste à mesurer dans le terminal émission A les fréquences Fpe et Fe par l'intermédiaire de compteurs de manière à obtenir respectivement les codes N et P à des intervalles réguliers de période -e- au lieu de -a-, mais dans ce cas la période -e- est la même pour tous les terminaux.

Dans le terminal réception B, le procédé consiste à mesurer les fréquences Fpr et Fr par l'intermédiaire de compteurs de manière à obtenir respectivement les codes R et X à des intervalles réguliers de période -e- au lieu de -b- (figure 4) ou -a- (figure 5). Ces codes R et X sont comparés aux codes N et P transmis par le terminal émission A de manière à déterminer la modification à effectuer sur la fréquence Fr pour qu'elle soit égale à Fe.

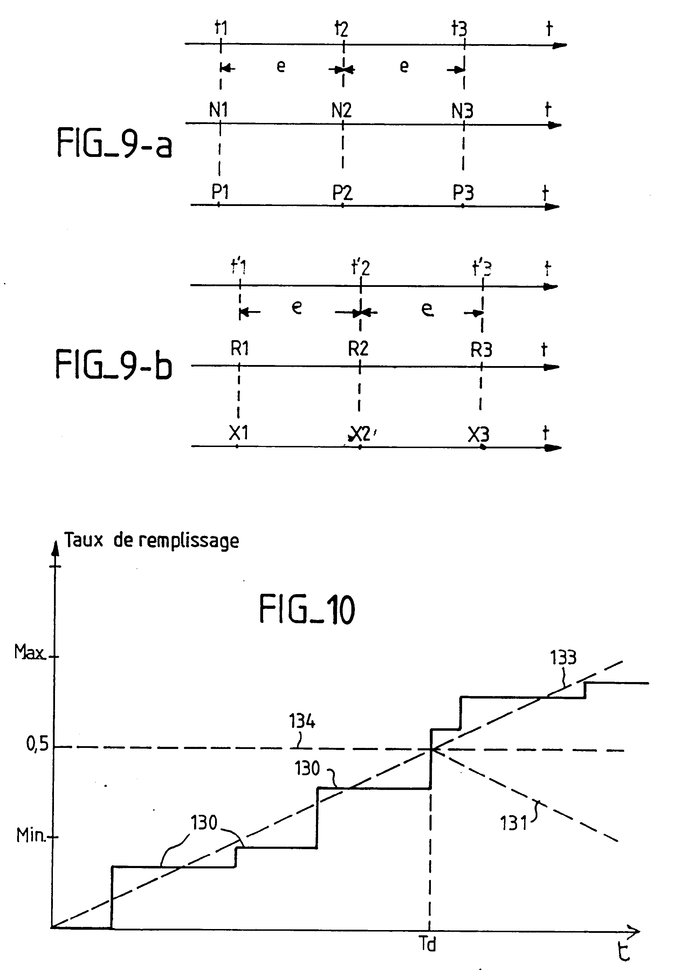

La relation qui lie les codes N, P, R et X sera déterminée à l'aide des diagrammes des figures 9a et 9b qui sont semblables à ceux des diagrammes 6a et 6b avec cette différence que les intervalles de temps séparant les instants de mesure à l'émission t1, t2, t3 ... sont égaux à ceux séparant les instants de mesure à la réception t'1, t'2, t'3 ..., c'est-à-dire égaux à -e-. Cependant, cette condition n'est pas nécessaire pour un fonctionnement correct du système Ces diagrammes permettent d'établir les relations (1) et (2) dont la combinaison conduit à la relation (3). La réalisation de la condition formulée par la relation (3) permet d'obtenir Fr = Fe et elle est atteinte en modifiant les codes X par l'intermédiaire de la variation de la fréquence Fr.

Sur la figure 7, on a représenté de manière détaillée les circuits 12 et 14 (figure 1) du terminal émission A et le circuit 13 (figure 1) du terminal réception B. Par ailleurs, la figure 8 représente de manière détaillée le circuit de synchronisation 15 de la figure 1. La plupart des éléments des circuits 12, 13, 14 et 15 sont identiques à ceux décrits précédemment et leur arrangement est semblable. Pour la clarté de l'exposé, ces éléments portent de nouvelles références et ont été regroupées par fonction ou circuit.

Le circuit d'élaboration dans chaque terminal d'un signal à la fréquence pilote Fo du réseau, référencé 12 pour le terminal émission A (et 1 pour le terminal réception B) comprend un compteur 81 (ou 101), qui compte les signaux à la fréquence Fo reçus par le récepteur 10 (ou 11), dont le contenu est chargé dans un registre 82 (ou 102) et est représentatif de la fréquence Fo. Un oscillateur (V.C.O.) 86 (ou 106) dont la fréquence est réglable par une tension élaborée par un convertisseur numérique-analogique 85 (ou 105) fournit un signal impulsionnel à la fréquence Fpe (ou Fpr). Un compteur 87 (ou 107) compte les impulsions de sortie de l'oscillateur 86 (ou 106). Le contenu du compteur 87 (ou 107) est chargé dans deux registres 83 (ou 103) et 93 (ou 113), ce dernier registre faisant partie du circuit d'élaboration des messages de synchronisation 14 dans le terminal émission A ( ou du circuit de synchronisation 15 dans le terminal réception B). Un registre 84 (ou 104) contient sous forme numérique la tension de commande de l'oscillateur 86 (ou 106). Le circuit 12 (ou 13) comprend également un microprocesseur 88 (ou 108) qui est connecté à divers éléments 82, 83, 84 et 94 (ou 102, 103 ou 114) par une liaison bidirectionnelle ou BUS 89 (ou 109).

Le circuit horloge local 7 du terminal émission A comprend essentiellement un oscillateur à la fréquence Fpe dont le signal de sortie impulsionnel est appliqué, d'une part, à un compteur 91 du circuit 14 et, d'autre part, aux différents circuits 1, 2, et 3 (figure 1) du terminal émission A.

Le circuit d'élaboration 14 des messages de synchronisation N et P comprend, outre le registre 93 mentionné ci-dessus, un deuxième registre 92 qui est chargé avec le contenu du compteur 91. Il comprend également un comparateur 94 qui compare le contenu du compteur 87 à un code représentatif de la durée -e- et qui fournit un signal de transfert des contenus N et P des registres 92 et 93 chaque fois qu'il y a égalité.

Le fonctionnement des circuits 7, 12 et 14 est analogue à celui des figures 2 et 3 et ne sera donc exposé que succinctement. Pour que la fréquence Fpe soit égale à la fréquence Fo, il est nécessaire que les différences des contenus des registres 82 et 83 soient égaux à des instants séparés par des intervalles de temps égaux.

A cet effet, le microprocesseur 88 compare ces contenus à intervalles réguliers et en fonction de leur écart charge le registre 84 par un code qui modifie la fréquence de l'oscillateur 86 pour que le contenu du registre 83 se rapproche et soit égal au contenu du registre 82.

Le contenu N du registre 93 est représentatif de la fréquence pilote Fpe = Fo tandis que le contenu P du registre 92 est représentatif de la fréquence d'émission Fe. A la fin de chaque période de durée -e-, mesurée par le comparateur 94, les contenus N et P des registres 93 et 92 sont transférés aux circuits d'émission 18 du terminal A.

Le terminal réception B comprend, outre les circuits 11 et 13 identiques aux circuits 10 et 12 du terminal émission A, un circuit horloge local à la fréquence Fr et un circuit de synchronisation 15 de cette fréquence Fr sur la fréquence Fe. Le circuit horloge local 8 comprend, comme chacun des deux circuits horloge pilote 12 et 13, un oscillateur (V.C.O.) 110 dont la fréquence Fr est réglable par une tension fournie par un convertisseur numérique-analogique 118, cette tension étant élaborée par le microprocesseur 108 du terminal réception sous la forme d'un code V qui est chargé dans un registre 119. Il comprend également un compteur 111 qui compte les impulsions fournies par l'oscillateur 110.

Le circuit de synchronisation 15 comprend, un registre 112 qui est chargé par le contenu d'un compteur 111, un registre 113 qui est chargé par le contenu du compteur 107 du circuit horloge pilote 13, un comparateur 114 qui fournit des impulsions de période e servant au transfert du contenu des registres 112 et 113 vers le microprocesseur 108. Aux instants de période -e-, les contenus des registres sont R1, R2, R3 ... pour le registre 113 et X1, X2, X3 ... pour le registre 112.

Du côté réception des messages, le circuit de synchronisation comprend un registre 120 qui reçoit les codes P1, P2, P3 ... et un registre 121 qui reçoit les codes N1, N2, N3 .... Il comprend également des mémoires de file d'attente 126 et 127 qui enregistrent respectivement les codes P et N au fur et à mesure de leur réception et deux registres de sortie 116 et 117 des codes P et N respectivement.

Les circuits directement associés à la mémoire de synchronisation 6 comprennent d'abord un circuit de gestion de lecture 124 qui reçoit de la mémoire 6 des informations sur notamment l'état de son remplissage et les adresses des messages les plus anciens. Ils comprennent ensuite le compteur 122 d'adressage de la mémoire 6 qui est incrémenté par les impulsions à la fréquence Fr de l'oscillateur 110 et qui est initialisé par un code d'adresse I fourni par le circuit de gestion de lecture 124. Enfin un circuit ET 123 connecté entre le compteur 122 et la mémoire 6 permet de commander la lecture de ladite mémoire.

Les différents éléments du circuit de synchronisation 15 sont commandés par le microprocesseur 108 par l'intermédiaire de la liaison bidirectionnelle ou BUS 109 qui est connectée aux registres 112, 113, 116, 117 et 119, aux mémoires 126 et 127, au circuit ET 123 et au circuit de gestion 124.

Le fonctionnement du circuit de synchronisation 15 de la figure 8 est analogue à celui qui a été décrit précédemment en relation avec les figures 4 et 5 et ne sera donc décrit que succinctement. Comme on l'a expliqué précédemment, les codes X et R contenus dans les registres 112 et 113 à la fin de chaque période de durée -e- sont tranférés vers le microprocesseur 108, ce dernier commandant le transfert des contenus P et N des registres 116 et 117. En fonction des valeurs de R, X, N et P, le microprocesseur élabore un code V qui modifie la fréquence de l'oscillateur 110 pour que la relation (3) soit réalisée, ce qui correspond à obtenir Fr = Fe.

La lecture de la mémoire 6 n'est autorisée que lorsqu'elle est remplie au moins à moitié, condition qui est détectée par le circuit de gestion de lecture 124. Cette information du coefficient de remplissage est transmise de manière continue au microprocesseur 108 qui fournit alors un signal d'ouverture du circuit ET 123. Par ailleurs, le circuit 124 connaît l'adresse du message le plus ancien contenu dans la mémoire 6 et ce code d'adressage I est chargé dans le compteur 122 dont la valeur s'incrémente à partir de ce code de manière à lire les messages de moins en moins anciens.

La figure 10 est un diagramme montrant le mécanisme d'écriture dans la mémoire de synchronisation 6, l'axe des abcisses indiquant le temps et l'axe des données indiquant le coefficient de remplissage. Ce diagramme montre que le remplissage de la mémoire 6 s'effectue par paliers 130 au fur et à mesure de l'arrivée des messages. Dans cet exemple, à la quatrième arrivée de message, au temps Td, le coefficient de remplissage dépasse 0,5 et la lecture est déclenchée selon un débit qui est défini par la droite 131 et qui est proportionnel à la fréquence Fr. Par ailleurs, le débit moyen de remplissage est défini par la droite 133 et est proportionnel à la fréquence Fe. En conséquence, lors du fonctionnement continu de la transmission, comme Fr = Fe, la mémoire 6 se vide aussi vite qu'elle se remplit et la courbe moyenne de remplissage est matérialisée par la droite horizontale 134.

Dans ce mode de réalisation des figures 7 à 10, la mémoire 6 doit avoir une capacité plus grande que dans les modes décrits en relation avec les figures précédentes 2 à 6 lorsque le débit de la transmission est très variable au cours du temps de manière à n'être jamais totalement pleine ou totalement vide. On remarquera que l'on peut déclencher la lecture à une valeur de remplissage autre que 0,5.

Les différents dispositifs de synchronisation qui viennent d'être décrits permettent de définir un procédé qui comprend les étapes suivantes :

a) la génération dans chaque terminal émission A ou réception B d'un signal de synchronisation réseau à une fréquence Fpe (émission) ou Fpr (réception) à partir du signal du réseau horloge pilote à la fréquence Fo ;

b) la génération dans chaque terminal émission A ou réception B d'un signal à la fréquence d'émission Fe (terminal A) ou de réception Fr (terminal B) ;

c) la mesure, dans le terminal émission A, de la fréquence Fe pendant un intervalle de temps -a- qui est mesuré à l'aide d'un signal à la fréquence Fpe de manière à obtenir des codes P successifs P1, P2, ... qui sont représentatifs de la fréquence Fe ;

d) la mesure, dans le terminal émission A, de la fréquence Fpe pendant un intervalle de temps -a- qui est mesuré à l'aide d'un signal à la fréquence Fpe de manière à obtenir des codes N successifs N1, N2, ... qui sont représentatifs de la fréquence Fpe ;

e) la transmission des codes successifs N1, N2, ..., P1, P2, ..., au terminal réception B en même temps que les messages d'information, à un rythme défini par le signal à la fréquence Fe ;

f) la mesure, dans le terminal réception B, de la fréquence Fr pendant un intervalle de temps -b- qui est mesuré à l'aide d'un signal à la fréquence Fpr de manière à obtenir des codes X succesifs X1, X2, ... qui sont représentatifs de la fréquence Fr ;

g) la modification de la fréquence Fr et donc des codes successifs X pour qu'il en résulte l'égalité des fréquences Fr et Fe.

Ce procédé correspond à la variante du circuit de synchronisation décrit en relation avec la figure 5.

Pour que la mémoire de synchronisation 6 soit lue au moment opportun, ce procédé doit être complété par l'étape complémentaire suivante qui consiste en la lecture de la mémoire de synchronisation (6) avec des signaux de fréquence Fr = Fe un certain intervalle de temps après l'émission des codes N et P.

Cet intervalle de temps peut être égal au retard maximal de transmission T ou correspondre à l'instant auquel la mémoire (6) présente un taux de remplissage voisin de 0,5 (variante de la figure 8).

Le procédé décrit ci-dessus peut être complété par la mesure, dans le terminal B, de la fréquence Fpr pendant un intervalle de temps -b- qui est mesuré à l'aide d'un signal à la fréquence Fpr de manière à obtenir des codes R successifs R1, R2, R3 ... qui sont représentatifs de la fréquence Fpr (variantes des figures 4 et 8).

Les durées -a- et -b- peuvent être égales ou différentes, sont programmées par les microprocesseurs et peuvent être les mêmes dans tout le réseau de transmission.

## Revendications

1. Procédé de synchronisation entre au moins un terminal émission (A) et un terminal réception (B) qui ont accès à un réseau horloge pilote indépendant de fréquence Fo et entre lesquels sont transmis des messages d'informations sans référence temporelle, lesdits messages d'informations étant transmis par le terminal émission (A) à un rythme défini par une fréquence Fe et étant enregistrés au terminal réception (B) dans une mémoire de synchronisation (6) qui est lue à un rythme défini par une fréquence de réception Fr, caractérisé en ce qu'il comprend les étapes suivantes :

a) la génération dans chaque terminal émission (A) ou réception (B) d'un signal de synchronisation réseau à une fréquence Fpe (émission) ou Fpr (réception) à partir du signal du réseau horloge pilote à la fréquence Fo ;

b) la génération dans chaque terminal émission (A) ou réception (B) d'un signal à la fréquence d'émission Fe (terminal A) ou de réception Fr (terminal B) ;

c) la mesure, dans le terminal émission (A), de la fréquence Fe pendant un intervalle de temps -a- qui est mesuré à l'aide d'un signal à la fréquence Fpe de manière à obtenir des codes P successifs P1, P2, ... qui sont représentatifs de la fréquence Fe ;

d) la mesure, dans le terminal émission (A) de la fréquence Fpe pendant un intervalle de temps -a- qui est mesuré à l'aide d'un signal à la fréquence Fpe de manière à obtenir des codes N successifs N1, N2, ... qui sont représentatifs de la fréquence Fpe ;

e) la transmission des codes successifs N1, N2, ..., P1, P2, ..., au terminal réception (B) en même temps que les messages d'information, à un rythme défini par le signal à la fréquence Fe ;

f) la mesure, dans le terminal réception (B), de la fréquence Fr pendant un intervalle de temps -b- qui est mesuré à l'aide d'un signal à la fréquence Fpr de manière à obtenir des codes X successifs X1, X2, ... qui sont représentatifs de la fréquence Fr ;

g) la modification de la fréquence Fr et donc des codes successifs X pour qu'il en résulte l'égalité des fréquences Fr et Fe ;

h) la lecture de la mémoire de synchronisation (6) avec des signaux de fréquence Fr = Fe un certain intervalle de temps après l'émission des codes N et P.

2. Procédé de synchronisation selon la revendication 1, caractérisé en ce que ledit intervalle de temps est égal au retard maximal T de transmission entre les terminaux concernés.

3. Procédé de synchronisation selon la revendication 1, caractérisé en ce que la fin dudit intervalle de temps est déterminée par l'instant auquel la mémoire de synchronisation (6) atteint un certain taux de remplissage.

4. Procédé de synchronisation selon la revendication 3, caractérisé en ce que le taux de remplissage est égal à 0,5.

5. Procédé de synchronisation selon la revendication 1, 2, 3 ou 4, dans le cas où le réseau horloge pilote (9) fournit un signal horaire, caractérisé en ce que la modification de la fréquence Fr est réalisée de manière à satisfaire la relation suivante entre deux codes successifs P et X de rangs i et i+1 :

$$P_{i+1} - P_i = X_{i+1} - X_i$$

6. Procédé de synchronisation selon la revendication 1, 2, 3 ou 4, caractérisé en ce qu'il comprend l'opération complémentaire suivante :

   h) la mesure, dans le terminal réception (B) de la fréquence Fpr pendant un intervalle de temps -b- qui est mesuré à l'aide d'un signal à la fréquence Fpr de manière à obtenir des codes R successifs R1, R2, R3 ... qui sont représentatifs de la fréquence Fpr, cette dernière étant égal à Fpe.

7. Procédé de synchronisation selon la revendication 6, caractérisé en ce que la modification de la fréquence Fr est réalisée de manière à satisfaire la relation suivante entre deux codes successifs N, P, R et X de rangs i et i+1 :

$$X_{i+1} - X_i = \frac{R_{i+1} - R_i}{N_{i+1} - N_i} \times (P_{i+1} - P_i)$$

8. Procédé de synchronisation selon la revendication 6, caractérisé en ce que l'intervalle de temps -b- a une durée différente de celle de -a-.

9. Procédé de synchronisation selon la revendication 6, caractérisé en ce que l'intervalle de temps -b- a une durée égale à celle de -a-.

10. Procédé de synchronisation selon la revendication 5, 6 ou 7, caractérisé en ce que l'intervalle de temps -b- a une durée égale ou supérieure à celle de T.

11. Dispositif pour mettre en oeuvre le procédé de synchronisation selon la revendication 1, caractérisé en ce qu'il comprend :
    - des premiers moyens (12, 7), dans le terminal émission (A), pour générer des signaux à la fréquence pilote Fpe et à la fréquence d'émission Fe ;
    - des deuxièmes moyens (14), dans le terminal émission (A), pour générer les codes successifs N et P ;
    - des troisièmes moyens (18), dans le terminal émission (A), pour transmettre au terminal réception (B) les codes N et P ;
    - des quatrièmes moyens (13, 8), dans le terminal réception (B), pour générer des signaux à la fréquence pilote Fpr et à la fréquence Fr ;
    - des cinquièmes moyens (15, 8), dans le terminal réception (B), pour générer les codes successifs X ;
    - des sixièmes moyens (15), dans le terminal de réception (B), pour modifier la fréquence Fr et ainsi obtenir une modification des codes X pour qu'il en résulte l'égalité des fréquences Fr et Fe ; et
    - des septièmes moyens dans le terminal de réception (B) pour déclencher la lecture de la mémoire de synchronisation (6) avec des signaux de fréquence Fr = Fe un certain intervalle de temps après l'émission des codes N et P.

**12.** Dispositif selon la revendication 11, caractérisé en ce que les premiers et deuxièmes moyens comprennent :
- un oscillateur (7) à la fréquence Fe ;
- un oscillateur (20) à la fréquence variable commandée par tension qui est connecté dans une boucle d'asservissement en fréquence ;
- un premier compteur (32) connecté à l'oscillateur (7) ;
- un deuxième compteur (21) connecté à l'oscillateur (20) ;
- des registres (33 et 34) pour recevoir respectivement les contenus des premiers et deuxièmes compteurs (32 et 21) ; et
- un dispositif de détermination de la durée -a- (36, 35) qui fournit, à la fin de cette durée, un signal de transfert des codes N et P contenus respectivement dans lesdits registres (34 et 33).

**13.** Dispositif selon la revendication 11, caractérisé en ce que les quatrièmes moyens comprennent :
- un premier oscillateur à fréquence variable commandée en tension qui est connectée dans une boucle d'asservissement en fréquence, de manière à fournir un signal à la fréquence Fpr ; et
- un deuxième oscillateur à fréquence variable commandée en tension et connectée dans une boucle d'asservissement en fréquence de manière à fournir un signal à la fréquence Fr.

**14.** Dispositif selon les revendications 11 et 13, caractérisé en ce que les cinquièmes moyens pour générer les codes successifs X comprennent :
- un compteur (55, 111) qui reçoit les signaux à la fréquence FR, et
- un registre (53, 112) qui est chargé par le contenu du compteur (55, 111) à des instants séparés par une durée -b-.

**15.** Dispositif selon la revendication 14, caractérisé en ce que les sixièmes moyens comprennent :
- au moins un système de file d'attente (41, 45, 48, 70 ou 120, 126, 116) pour le traitement des codes P reçus ;
- un microprocesseur (17) pour lire les codes contenus dans les registres (48, 70, 116) et calculer la tension à appliquer au deuxième oscillateur à fréquence variable en fonction desdits codes de manière à modifier la fréquence Fr.

**16.** Dispositif selon la revendication 14, pour mettre en oeuvre le procédé selon la revendication 2, 3 ou 4, caractérisé en ce que les septièmes moyens sont des moyens (124) pour mesurer le taux de remplissage de la mémoire de synchronisation (6) et pour déclencher la lecture de ladite mémoire lorsqu'un certain taux de remplissage est atteint.

**17.** Dispositif selon la revendication 14, pour mettre en oeuvre le procédé selon la revendication 2, caractérisé en ce que les septièmes moyens sont des moyens (40, 42, 43, 44, 46, 51, 62, 71) pour mesurer l'heure N+T et pour déclencher la lecture de la mémoire de synchronisation (6) chaque fois que l'heure N+T est atteinte au terminal réception (B).

**18.** Dispositif selon la revendication 17, pour mettre en oeuvre le procédé selon la revendication 7, 8, 9, 10 ou 11, caractérisé en ce que le terminal réception (B) comprend en outre des neuvièmes moyens (49, 50, 52 ou 113, 114) pour mesurer la fréquence Fpr pendant un intervalle de temps -b- et obtenir les codes R, le microprocesseur (17) étant prévu pour réaliser la condition de la revendication 8 entre les codes N, P, R et X.

## Patentansprüche

**1.** Verfahren zur Synchronisation zwischen wenigstens einem Sendeterminal (A) und einem Empfangsterminal (B), die Zugriff auf ein unabhängiges Takt-Steuernetz der Frequenz Fo haben und zwischen denen Informationsnachrichten ohne zeitliche Referenz übertragen werden, wobei diese Informationsnachrichten durch das Sendeterminal (A) mit einem Rhythmus übertragen werden, der durch eine Frequenz Fe bestimmt ist, und in dem Empfangsterminal (B) in einem Synchronisationsspeicher (6) gespeichert werden, der in einem Rhythmus ausgelesen wird, welcher durch eine Empfangsfrequenz Fr bestimmt wird, **dadurch gekennzeichnet,** daß es folgende Schritte umfaßt:
a) die in jedem Sendeterminal (A) oder Empfangsterminal (B) erfolgende Erzeugung eines Netz-Synchronisationssignals mit einer Frequenz Fee (Sendebetrieb) oder Fpr (Empfangsbetrieb) ausgehend von dem Takt-Steuernetz-Signal der Frequenz Fo;

b) die in jedem Sendeterminal (A) oder Empfangsterminal (B) erfolgende Erzeugung eines Signals der Sendefrequenz Fe (Terminal A) oder Empfangsfrequenz Fr (Terminal B);

c) die in dem Sendeterminal (A) erfolgende Messung der Frequenz Fe während einer Zeitspanne -a-, die mittels eines Signals der Frequenz Fpe gemessen wird, in solcher Weise, daß aufeinanderfolgende Codes P gewonnen werden, P1, P2, ..., die repräsentativ für die Frequenz Fe sind;

d) die in dem Sendeterminal (A) erfolgende Messung der Frequenz Fpe während einer Zeitspanne -a-, die mittels eines Signals der Frequenz Fpe gemessen wird, in solcher Weise, daß N aufeinanderfolgende Codes gewonnen werden, N1, N2, ..., die repräsentativ für die Frequenz Fpe sind;

e) die Übertragung der aufeinanderfolgenden Codes N1, N2, ..., P1, P2, ... zu dem Empfangsterminal (B) zu gleicher Zeit wie die Informationsnachrichten, mit einem Rhythmus, der durch das Signal der Frequenz Fe bestimmt wird;

f) die in dem Empfangsterminal (B) erfolgende Messung der Frequenz Fr während einer Zeitspanne -b-, die mittels eines Signals der Frequenz Fpr gemessen wird, in solcher Weise, daß X aufeinanderfolgende Codes gewonnen werden, X1, X2, ..., die repräsentativ für die Frequenz Fr sind;

g) die Veränderung der Frequenz Fr und folglich der aufeinanderfolgenden Codes X in solcher Weise, daß sich Gleichheit zwischen den Frequenzen Fr und Fe einstellt;

h) das Auslesen aus dem Synchronisationsspeicher (6) mit Signalen der Frequenz Fr = Fe eine bestimmte Zeitspanne nach dem Senden der Codes N und P.

2. Synchronisationsverfahren nach Anspruch 1, **dadurch gekennzeichnet,** daß die genannte Zeitspanne gleich der maximalen Verzögerung T der Übertragung zwischen den betreffenden Terminals ist.

3. Synchronisationsverfahren nach Anspruch 1, **dadurch gekennzeichnet,** daß das Ende der genannten Zeitspanne durch denjenigen Zeitpunkt bestimmt ist, zu dem der Synchronisationsspeicher (6) einen bestimmten Füllgrad erreicht.

4. Synchronisationsverfahren nach Anspruch 3, **dadurch gekennzeichnet,** daß der Füllgrad gleich 0,5 ist.

5. Synchronisationsverfahren nach Anspruch 1, 2, 3 oder 4, für den Fall, daß das Takt-Steuernetz (9) ein Stundensignal liefert, **dadurch gekennzeichnet,** daß die Veränderung der Frequenz Fr in solcher Weise erfolgt, daß die folgende Beziehung zwischen zwei aufeinanderfolgenden Codes P und X der Ordnungszahlen i und i+1 erfüllt ist:

$$P_{i+1} - P_i = X_{i+1} - X_i$$

6. Synchronisationsverfahren nach Anspruch 1, 2, 3 oder 4, **dadurch gekennzeichnet,** daß es folgenden komplementären Schritt umfaßt:

h) die in dem Empfangsterminal (B) erfolgende Messung der Frequenz Fpr während einer Zeitspanne -b-, die mittels eines Signals der Frequenz Fpr gemessen wird, in solcher Weise, daß aufeinanderfolgende Codes R gewonnen werden, R1, R2, R3, ..., die repräsentativ für die Frequenz Fpr sind, welchletztere gleich Fpe ist.

7. Synchronisationsverfahren nach Anspruch 6, **dadurch gekennzeichnet,** daß die Veränderung der Frequenz Fr in solcher Weise geschieht, daß die folgende Beziehung zwischen zwei aufeinanderfolgenden Codes N, P, R und X der Ordnungszahlen i und i+1 erfüllt ist.

$$X_{i+1} - X_i = \frac{R_{i+1} - R_i}{N_{i+1} - N_i} \times (P_{i+1} - P_i)$$

8. Synchronisationsverfahren nach Anspruch 6, **dadurch gekennzeichnet,** daß die Zeitspanne -b- eine andere Dauer als -a- aufweist.

9. Synchronisationsverfahren nach Anspruch 6, **dadurch gekennzeichnet,** daß die Zeitspanne -b- von gleicher Dauer wie -a- ist.

10. Synchronisationsverfahren nach Anspruch 5, 6 oder 7, **dadurch gekennzeichnet,** daß die Zeitspanne -b- von einer Dauer ist, die gleich T oder größer ist.

11. Vorrichtung zur Durchführung des Verfahrens nach Anspruch 1, **dadurch gekennzeichnet,** daß sie umfaßt:
    - erste Mittel (12, 7) in dem Sendeterminal (A) zur Erzeugung von Signalen mit der Pilotfrequenz Fpe und mit der Sendefrequenz Fe;
    - zweite Mittel (14) in dem Sendeterminal (A) zur Erzeugung der aufeinanderfolgenden Codes N und P;
    - dritte Mittel (18) in dem Sendeterminal (A) zur Übertragung der Codes N und P zu dem Empfangsterminal (B);
    - vierte Mittel (13, 8) in dem Empfangsterminal (B) zur Erzeugung von Signalen der Pilotfrequenz Fpr und der Frequenz Fr;
    - fünfte Mittel (15, 8) in dem Empfangsterminal (B) zur Erzeugung der aufeinanderfolgenden Codes X;
    - sechste Mittel (15) in dem Empfangsterminal (B) zum Verändern der Frequenz Fr, um so eine Veränderung der Codes X zu erreichen, damit sich die Gleichheit zwischen den Frequenzen Fr und Fe einstellt; und
    - siebte Mittel in dem Empfangsterminal (B) zur Auslösung des Lesens aus dem Synchronisationsspeicher (6) mit Signalen der Frequenz Fr = Fe eine bestimmte Zeitspanne nach dem Senden der Codes N und P.

12. Vorrichtung nach Anspruch 11, **dadurch gekennzeichnet,** daß die ersten und zweiten Mittel umfassen:
    - einen Oszillator (7) der Frequenz Fe;
    - einen Oszillator (20) mit variabler Frequenz, die spannungsgesteuert ist, in einer Frequenzregelschleife;
    - einen ersten, an den Oszillator (7) angeschlossenen Zähler (32);
    - einen zweiten, an den Oszillator (20) angeschlossenen Zähler (21);
    - Register (33 und 34), von denen das erste den Inhalt des ersten und das zweite den Inhalt des zweiten Zählers (32 bzw. 21) empfängt; und
    - eine Vorrichtung zur Bestimmung der Dauer -a- (36, 35), welche am Ende dieser Dauer ein Signal zur Überführung der Codes N und P liefert, die in dem einen bzw. anderen Register (34 und 33) enthalten sind.

13. Vorrichtung nach Anspruch 11, dadurch gekennzeichnet, daß die vierten Mittel umfassen:
    - einen ersten Oszillator mit variabler, spannungsgesteuerter Frequenz, der in einer Frequenzregelschleife angeordnet ist, so daß er ein Signal der Frequenz Fpr liefert; und
    - einen zweiten Oszillator mit variabler, spannungsgesteuerter Frequenz, der in einer Frequenzregelschleife angeordnet ist, so daß er ein Signal der Frequenz Fr liefert.

14. Vorrichtung nach den Ansprüchen 11 und 13, **dadurch gekennzeichnet,** daß die fünften Mittel zur Erzeugung der aufeinanderfolgenden Codes X umfassen:
    - einen Zähler (55, 111), der die Signale der Frequenz Fr empfängt, und
    - ein Register (53, 112), das durch den Inhalt des Zählers (55, 111) zu Zeitpunkten geladen wird, die durch eine Dauer -b- voneinander getrennt sind.

15. Vorrichtung nach Anspruch 14, **dadurch gekennzeichnet,** daß die sechsten Mittel umfassen:
    - wenigstens ein Warteschlangensystem (41, 45, 48, 70 oder 120, 126, 116) zur Verarbeitung der empfangenen Codes P;
    - einen Mikroprozessor (17) zum Lesen der in den Registern (48, 70, 116) enthaltenen Codes und Berechnen der an den zweiten Oszillator mit variabler Frequenz in Abhängigkeit von diesen Codes anzulegenden Spannung, damit die Frequenz Fr geändert wird.

16. Vorrichtung nach Anspruch 14, zur Durchführung des Verfahrens nach Anspruch 2, 3 oder 4, **dadurch gekennzeichnet,** daß die siebten Mittel Mittel (124) zum Messen des Füllgrades des Synchronisationsspeichers (6) und zum Auslösen des Lesens aus diesem Speicher, wenn ein bestimmter Füllgrad erreicht ist, sind.

17. Vorrichtung nach Anspruch 14, zur Durchführung des Verfahrens nach Anspruch 2, **dadurch gekennzeichnet,** daß die siebten Mittel Mittel (40, 42, 43, 44, 46, 51, 62, 71) zum Messen der Zeit N+T und zum Auslösen des Lesens aus dem Synchronisationsspeicher (6) jedesmal dann, wenn die Zeit N+T im Empfangsterminal (B) erreicht ist, sind.

**18.** Vorrichtung nach Anspruch 17, zur Durchführung des Verfahrens nach Anspruch 7, 8, 9, 10 oder 11, **dadurch gekennzeichnet,** daß der Empfangsterminal (B) ferner neunte Mittel (49, 50, 52 oder 113, 114) umfaßt, um die Frequenz Fpr während einer Zeitspanne -b- zu messen und die Codes R zu gewinnen, wobei der Mikroprozessor (17) so vorgesehen ist, daß er die Bedingung nach Anspruch 8 zwischen den Codes N, P, R und X erfüllt.

## Claims

**1.** A process for the synchronisation of at least one transmission terminal (A) and one reception terminal (B) which have access to an independent control clock network having the frequency Fo and between which data messages are transmitted without a time reference, the said data messages being transmitted by the transmission terminal (A) at a timing defined by a frequency Fe and being stored at the reception terminal (B) in a synchronisation memory (6) which is read at a timing defined by a reception frequency Fr, characterized in that it comprises the following stages:

a) generation at each transmission terminal (A) or reception terminal (B) of a network synchronisation signal at a frequency Fpe (transmission) or Fpr (reception) from the signal of the control clock network controlled at the frequency Fo;

b) generation at each transmission terminal (A) or reception terminal (B) of a signal at the transmission frequency Fe (terminal A) or the reception frequency Fr (terminal B);

c) measurement, at the transmission terminal (A) of the frequency Fe during a time interval -a- which is measured by means of a signal at the frequency Fpe so as to obtain successive P codes P1, P2,... which are representative of the frequency Fe;

d) measurement, at the transmission terminal (A) of the frequency Fpe during a time interval -a- which is measured by means of a signal at the frequency Fpe so as to obtain successive N codes N1, N2,... which are representative of the frequency Fpe;

e) transmission of the successive codes N1, N2, ..., P1, P2 ..., to the reception terminal (B) at the same time as the data messages at a timing defined by the signal having the frequency Fe;

f) measurement, at the reception terminal (B) of the frequency Fr during a time interval -b- which is measured with the help of a signal at the frequency Fpr so as to obtain successive X codes X1, X2,... which are representative of the frequency Fr;

g) alteration of the frequency Fr and thus of the successive X codes so that the frequencies Fr and Fe become equal;

h) reading of the synchronisation memory (6) with signals of frequency Fr = Fe at a fixed time interval after the transmission of the N and P codes.

**2.** A synchronisation process according to claim 1, characterized in that the said time interval is equal to the maximum delay T of transmission between the terminals concerned.

**3.** A synchronisation process according to claim 1, characterized in that the end of the said time interval is determined by the moment at which the synchronisation memory (6) reaches a fixed filling ratio.

**4.** A synchronisation process according to claim 3, characterized in that the filling ratio equals 0.5.

**5.** A synchronisation process according to claim 1, 2, 3 or 4 in the case where the control clock network (9) supplies a time signal, characterized in that the alteration of the frequency Fr is performed so as to satisfy the following relationship between two successive P and X codes of order number i and i+1:

$$P_{i+1} + P_i = X_{i+1} - X_i$$

**6.** A synchronisation process according to claim 1, 2, 3 or 4, characterized in that it comprises the following complementary operation:

h) measurement in the reception terminal (B) of the frequency Fpr during a time interval -b- which is measured by means of a signal at the frequency Fpr so as to obtain successive R codes R1, R2, R3, ... which are representative of the frequency Fpr, the latter being equal to Fpe.

**7.** A synchronisation process according to claim 6, characterized in that the alteration of the frequency Fr is performed so as to satisfy the following relationship between two successive N, P, R and X codes of order number i and i+1:

$$X_{i+1} - X_i = \frac{R_{i+1} - R_i}{N_{i+1} - N_i} \times (P_{i+1} - P_i)$$

8. A synchronisation process according to claim 6, characterized in that the time interval -b- has a different duration to that of -a-.

9. A synchronisation process according to claim 6, characterized in that the time interval -b- has a duration equal to that of -a-.

10. A synchronisation process according to claim 5, 6 or 7, characterized in that the time interval -b- has a duration equal to or geater than that of T.

11. A device for employing the synchronisation process according to claim 1, characterized in that it comprises:
    - first means (12, 7), at the transmission terminal (A), for generating signals at the control frequency Fpe and at the transmission frequency Fe;
    - second means (14), at the transmission terminal (A), for generating the successive N and P codes;
    - third means (18), at the transmission terminal (A), for transmitting the N and P codes to the reception terminal (B);
    - fourth means (13, 8), at the reception terminal (B), for generating signals at the control frequency Fpr and at the frequency Fr;
    - fifth means (15, 8), at the reception terminal (B), for generating the successive X codes;
    - sixth means (15), at the reception terminal (B), for altering the frequencies Fr and so obtaining a modification of the X codes so that the frequencies Fr and Fe become equal; and
    - seventh means, at the reception terminal (B), for triggering the reading of the synchronisation memory (6) using signals of frequency Fr = Fe a fixed time interval after the transmission of the N and P codes.

12. A device according to claim 11, characterized in that the first and second means comprise:
    - an oscillator (7) at the frequency Fe;
    - a voltage controlled variable frequency oscillator (20) which is connected in a frequency control loop;
    - a first counter (32) connected to the oscillator (7);
    - a second counter (21) connected to the oscillator (20);
    - registers (33 and 34) for receiving respectively the contents of the first and second counters (32 and 21);
    - a device for determining the duration of the period -a- (36, 35) which supplies, at the end of this period, a signal for transferring the N and P codes contained respectively in the said registers (34 and 33).

13. A device according to claim 11, characterized in that the fourth means comprise:
    - a first voltage controlled variable frequency oscillator which is connected in a frequency control loop so as to supply a signal having the frequency Fpr; and
    - a second voltage controlled variable frequency oscillator which is connected in a frequency control loop so as to supply a signal having the frequency Fr.

14. A device according to claims 11 and 13, characterized in that the fifth means, for generating the successive X codes, comprise:
    - a counter (55, 111) which receives the signals having the frequency FR, and
    - a register (53, 112) which is loaded by the contents of the counter (55, 111) at times separated by a time interval -b-.

15. A device according to claim 14, characterized in that the sixth means comprise:
    - at least one queueing system (41,45, 48, 70 or 120, 126, 116) for the processing of P codes received;
    - a microprocessor (17) for reading the codes contained in the registers (48, 70, 116) and calculating the voltage to be applied to the second, variable frequency oscillator as a function of the said codes so as to alter the frequency Fr.

16. A device according to claim 14, for employing the process according to claim 2, 3 or 4, characterized in that the seventh means are means (124) for measuring the filling ratio of the synchronisation memory (6) and for triggering the reading of the said memory when a predetermined filling ratio is reached.

17. A device according to claim 14, for employing the process according to claim 2, characterized in that the seventh means are means (40, 42, 43, 44, 46, 51, 62, 71) for measuring the time N+T and for triggering the reading of the synchronisation memory (6) each time the time N+T is reached at the reception terminal (B).

18. A device according to claim 17, for employing the process according to claim 7, 8, 9, 10 or 11, characterized in that the reception terminal (B) also comprises ninth means (49, 50, 52, or 113, 114) for measuring the frequency Fpr during a time interval -b- and for obtaining the R codes, the microprocessor (17) being provided to obtain the relationship mentioned in claim 8 between the codes N, P, R and X.

FIG_1

Horloge local réception 8

Horloge pilote 13

Récepteur réseau 11

Synchronisation horloge local 15

Micro processeur 17

Mémoire de synchro-nisation 6

Mémoire messages 5

Récepteur messages 4

Horloge réseau 9

Récepteur horloge 10

Horloge pilote 12

Horloge local émission 7

Micro-processeur 16

Messages de synchronisation 14

Emetteur messages 3

Mémoire 2

Codeur 1

A 18

B 19

C

18

# FIG_2

Venant de 10 (ou 11) Fig.1

Fpe

Synchro

ET — 29

27 Registre ⟷ Registre — 28

Vers 16(ou 17) Fig. 1 Microprocesseur — 30

23

22

21 — Compteur

24 — Registre

25 — Convertisseur

20 — V. C.O.

Vers 14 ou( 15) Fig. 1

# FIG_3

Venant de 21_Fig2

Vers 16 Fig.1 Microprocesseur

35

Comparateur

36 — Registre — Venant de 7 Fig.1

34 — Registre — N

33 — Registre — P

32 — Compteur

Vers 18 Fig 1

FIG_4

Venant de 21 Fig.2

Comparateur 49

Registre 50

Comparateur 55

V.C.O. 57

Compteur

I 58

Convertisseur 56

Registre 54

Registre 52    R

Registre 53    X

Bistable 59

Vers 17 Fig.1 Microprocesseur    61

ET 60

Bistable 62    Comparateur 51    M

Registre 46    X    Registre N 47    P    Registre 48

Venant de 21 Fig.2

File d'attente 44    File d'attente 65    File d'attente 45

N+T

Additionneur 43

Registre 42    Registre 40    Registre 41

N    P

Venant de 5_Fig.1    Mémoire de messages

Vers 6 Fig 1 Mémoire de synchronisation

EP 0 328 448 B1

FIG_5

EP 0 328 448 B1

FIG_6-a

FIG_6-b

FIG_6-c

FIG_7

FIG_ 8

Venant de 107 Fig.7

Comparateur — 114

Registre R — 113

Compteur — 111

Registre X — 112

Compteur — 122

V. C. O. — 110

Convertisseur — 118

Registre — 119

Vers 108 Fig.7 Microprocesseur — 109

Registre — 117

Registre — 116

Gestion de lecture — 124

123

File d'attente — 127

File d'attente — 126

Registre — 121

Registre — 120

N

P

Venant de 6

Vers 6 Fig.1 Mémoire de synchronisation

Venant de 5 Fig.1 Mémoire de messages

8

EP 0 328 448 B1

FIG_9-a

FIG_9-b

FIG_10

Taux de remplissage